# EUROPEAN PATENT APPLICATION

(11) **EP 1 860 617 A2**
(43) Date of publication of application: **28.11.2007**
(21) Application number: 07107821.6
(22) Date of filing: 09.05.2007
(51) Int. Cl.: G07C 9/00

(54) **Security systems**

(30) Priority: 23.05.2006 GB 0610162
(71) Applicant: NISSAN MOTOR MANUFACTURING (UK) LTD, Bedfordshire MK43 0DB (GB)
(72) Inventor: Keenan, Pat Nissan Motor Manufacturing(UK), Cranfield, Bedfordshire MK43 0DB (GB)
(74) Representative: Hufton, Victoria Alice

(57) **Abstract**

A physical key is provided for controlling access to a secured resource using a response code. The physical key comprises a memory configured to store key status data and pre-encryption data unique to the secured resource. The physical key further comprises a code generator that is configured to generate the response code by generating an encryption key from the key status data and the pre-encryption data and combining the encryption key with challenge data issued upon attempting to access the secured resource.

## Description

This invention relates to security systems and particularly, but not exclusively, to key-operated vehicle security systems including the elements of a key, vehicle security components, an additional security component distinct from the vehicle security components.

In a vehicle context, keys are used to lock or unlock doors controlling access to the vehicle interior. Keys may also be used to control access to other parts of the vehicle including storage areas, the engine compartment and a fuel filler. Keys also control access to vehicle functions and resources such as accessories, engine ignition and engine start. Any facility, area or function to which the access needs to be controlled in a secure manner may be regarded generically as a 'secured resource' in this specification. Similarly, the term 'access' should therefore be construed with corresponding breadth in this specification.

The term 'key' should also be construed broadly in this specification. A key need not necessarily be a mechanical key having a toothed or patterned metal blade which matches a mechanical lock. Indeed, most modern vehicles can be opened by remote control, typically using radio frequency (RF) transmission, without inserting a mechanical key into a mechanical lock. Increasingly, a vehicle engine can also be started without inserting a mechanical key into a mechanical lock: instead, the driver need merely have an electronic key about his or her person in order to start the engine by, for example, touching an 'engine start' button in the vehicle cabin.

Nowadays, mechanical keys and locks increasingly provide merely a back-up function in the event that an electronic key is damaged or loses power, for example due to a flat battery. Commonly, therefore, electronic keys include a toothed or patterned blade co-operable with a mechanical lock. Also, it is still the case that most vehicles having remote-control entry systems require the insertion of a mechanical key into a mechanical lock to start the engine.

In the present context, the term 'key' should be construed as a physical, tangible key and typically refers to, but is not limited to, a hand-held key carried by a user permitting access to a secured resource.

The pressure of the insurance market and legislation such as EU Directive 95/56/EC means that cryptographic immobilisers have become the de facto standard in the automotive industry. However, an unintended side-effect of these pressures has been an escalation in violence against the person by individuals seeking to obtain a key to steal a vehicle.

It is against this background that the present invention has been made. It is an aim of the present invention to overcome the problem of unauthorised acquisition of the key resulting in vehicle theft. Other aims of the invention will be apparent from the following description.

In a broad sense, the invention resides in the ability to enable and disable a physical key for controlling access to a secured resource. Enabling and disabling the key is typically carried out by associated enabling and disabling apparatus, preferably in the form of a security terminal.

Accordingly, in an advantageous aspect, the invention resides in a security system comprising a physical key for controlling access to a secured resource. The physical key includes a memory for storing a security code and a code generator responsive to the security code to generate a validation code, such as an encryption key, for confirming the validity of the physical key to access the secured resource. Furthermore, the security system includes a terminal co-operable with the physical key selectively to write the security code to the memory or to modify the security code in the memory. The result is such that when written to the physical key by the terminal, the security code enables the code generator to generate the validation code but when the security code is modified by the terminal, the code generator is unable to generate the validation code, whereby the ability of the physical key to access the resource may be successively and repeatedly enabled and disabled by the terminal.

The memory of the physical key may comprise first and second address locations. The security code may be stored in one of the address locations and a modified validation code may be stored in another of the address locations.

The code generator may be responsive to the modified validation code to generate the validation code when the security code has been written to the memory by the terminal. The code generator may, for example, perform arithmetic manipulation upon the security code and the modified validation code to generate the validation code.

The code generator advantageously modifies the validation code and stores the modified validation code in its address location. The code generator may, for example, modify the validation code in accordance with another code, preferably the security code.

The validation code may be processed by an algorithm to generate a response to a challenge issued upon attempting to access the secured resource.

The physical key suitably includes a communication means for receiving the security code from the terminal. That communication means may include a transponder.

Advantageously, the terminal is remote from the secured resource. There may be a plurality of terminals each capable of enabling and disabling the same physical key. Conversely, the system may comprise a plurality of physical keys, each capable of being enabled and disabled by the same terminal.

The system of the invention is suitably embodied as a vehicle security system. In that case, the secured resource may be a vehicle interior or engine start function and the physical key may be a vehicle key. Also, the terminal may be inside a home or other premises and the secured resource may be a vehicle parked outside those premises. In a vehicular context, the system may further comprise a vehicle immobiliser control module for supplying the validation code to the code generator when the system is initialised.

The terminal advantageously includes user authorisation means. For example, the user authorisation means may include a keypad.

The terminal suitably includes a terminal communication means for data communication with the physical key. The terminal communication means may include an antenna.

The terminal may include user-selectable controls to enable or disable the physical key, and may be arranged to toggle the status of the physical key between enabled and disabled. The terminal may also include a system status indicator, which advantageously confirms whether the physical key is enabled or disabled. The status indicator may also confirm whether the terminal is capable of data communication with the physical key.

The invention extends to a physical key for use in the system of the invention, and encompasses a physical key for controlling access to a secured resource, the physical key having a memory for storing a security code and a code generator responsive to the security code to generate a validation code for confirming the validity of the physical key to access the secured resource, such that when the security code is written to the physical key, the security code enables the code generator to generate the validation code but when the security code is modified, the code generator is unable to generate the validation code, whereby the ability of the physical key to access the secured resource may be successively and repeatedly enabled and disabled.

The invention also extends to a terminal for use in the system of the invention, and encompasses a terminal for a security system, the terminal being co-operable with a physical key for controlling access to a secured resource, wherein the terminal selectively writes a security code to a memory in the physical key or modifies a security code stored in said memory, whereby the ability of the physical key to access the secured resource is successively and repeatedly enabled and disabled by the terminal.

The invention may also be expressed as a method of enabling a physical key that controls access to a secured resource, the method comprising writing a security code to the physical key and generating a validation code in the physical key with reference to the security code, the validation code confirming the validity of the physical key to access the secured resource.

The validation code may be written to the physical key before writing the security code to the physical key. A modified validation code may be stored in the memory of physical key, for example in a first address location in the memory.

The security code may be written to the physical key, for example using a terminal, and is stored by the code generator in the memory of the physical key. The security code may be written to a second address location in the memory.

The security code may be written to the physical key on different occasions using different terminals. It is also possible to write the security code to a plurality of physical keys using the same terminal, and to write different security codes to the keys of the plurality using the same terminal.

The method of the invention advantageously further comprises disabling the physical key by writing other than the security code to the physical key to prevent the physical key from generating a validation code that would confirm the validity of the physical key to access the secured resource.

The invention extends to a method of disabling a physical key that controls access to a secured resource and that has a security code stored in a memory, the method comprising writing a disabling code to the memory to overwrite the security code, preventing the physical key from generating a validation code that would confirm the validity of the physical key to access the secured resource.

The disabling code may be a code other than the security code, and may be zero. The disabling code is optionally written to an address location in the memory, suitably by a terminal, and may be written on different occasions using different terminals. It is also possible to write the disabling code to a plurality of physical keys using the same terminal.

The terminal optionally toggles between enabling and disabling on successive operations. Such toggling may be in response to user authorisation means.

The invention also encompasses a method of successively and repeatedly enabling and disabling a physical key that controls access to a secured resource, that method comprising alternating the enabling method of the invention with the disabling method of the invention.

The present invention will now be described, by way of example only, with reference to the accompanying drawings in which:
Figure 1 is a block diagram showing an example of a key according to the invention, in use;
Figure 2 is a block diagram showing a "key teach" operation wherein a transponder is programmed;
Figure 3 is a block diagram showing the enabling or disabling of a key according to the invention; and

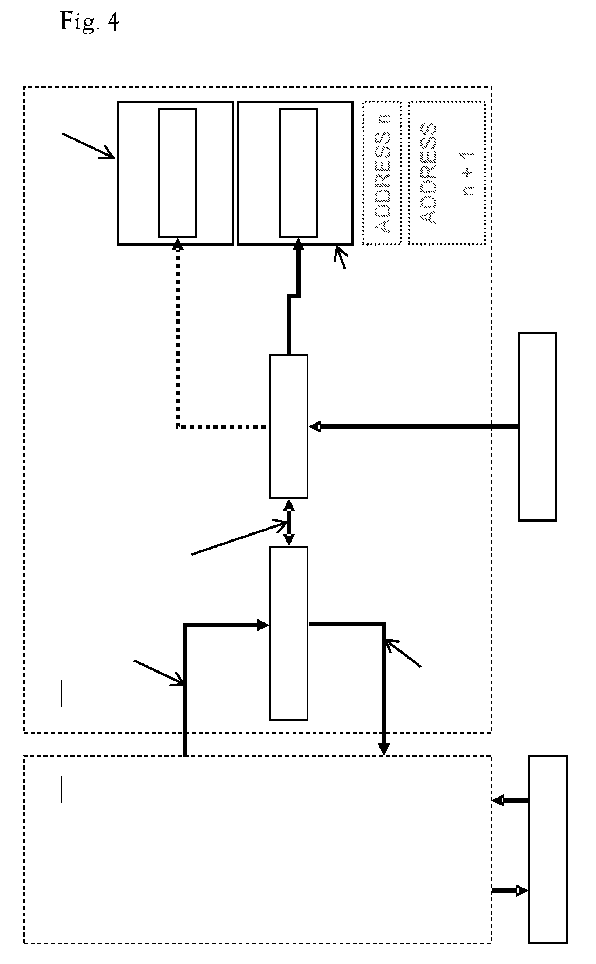

Figure 4 is a block diagram a security system according to the invention.

The invention provides a system for temporarily disabling a key by temporarily disabling a transponder carried by the key when the key is not required. The key transponder can subsequently be enabled when the key is next required. The system provides of an additional level of security for the vehicle owner distinct from the on-vehicle security system. The key is disabled and enabled during an interface with a security terminal remote from the vehicle. The terminal is intended to remain in the vicinity of the key when the key is not in use, for example in the owner's home or workplace when the vehicle is parked there. When the key is disabled, even if the key is stolen, it is not possible to make a bogus copy of the key or to use that key to gain unauthorised access to the vehicle.

The system of the present invention is compatible with any vehicle security system that uses electronic means to verify that a correct key is present, including vehicle security systems using fixed codes, rolling codes and encryption.

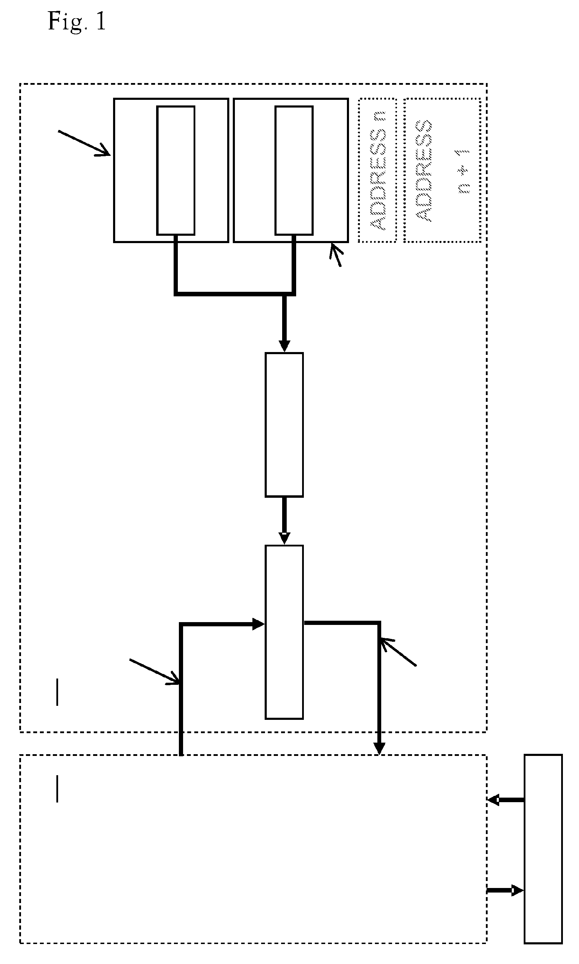

Figure 1 shows schematically a transponder 28 that is attached to a physical key 14. The transponder 28 comprises a memory with at least two address locations 40, 42; a key modifier 62 which is configured to access each of the address locations and an algorithm 38 which acts on the output of the key modifier 62.

In Figure 1 the transponder 28 is shown in communication with a vehicle Immobiliser Control Module (ICM) 26 which, in turn, is in communication with an Engine Control Module (ECM) 20. The ECM 20 must be activated before the vehicle engine can be started.

Access to a secured resource is controlled by a challenge-response pair. When a challenge is received from an ICM 26, challenge data 46 is processed by the algorithm 38 and the resulting response data 48. The algorithm 38 is provided with component from the key modifier 62. The key modifier 62 accesses data from both the first 40 and the second 42 address locations.

Communications between the transponder 28 and the ICM 26 are encrypted: the transponder 28 and the ICM 26 both store encryption data and run identical algorithms. In use, the ICM 26 outputs a random number code to the transponder. That code is processed by the ICM 26 and by the transponder in parallel. Thus, the code is identically modified by the encryption keys and algorithms of the ICM 26 and the transponder 28.

In this way, the ICM can challenge the transponder with the random number code and the transponder can respond to the challenge with a number code matching that produced by the algorithm and encryption key of the ICM. Neither the challenge nor the response directly discloses the encryption key, in contrast to fixed and rolling code systems that inherently disclose the codes upon which they rely.

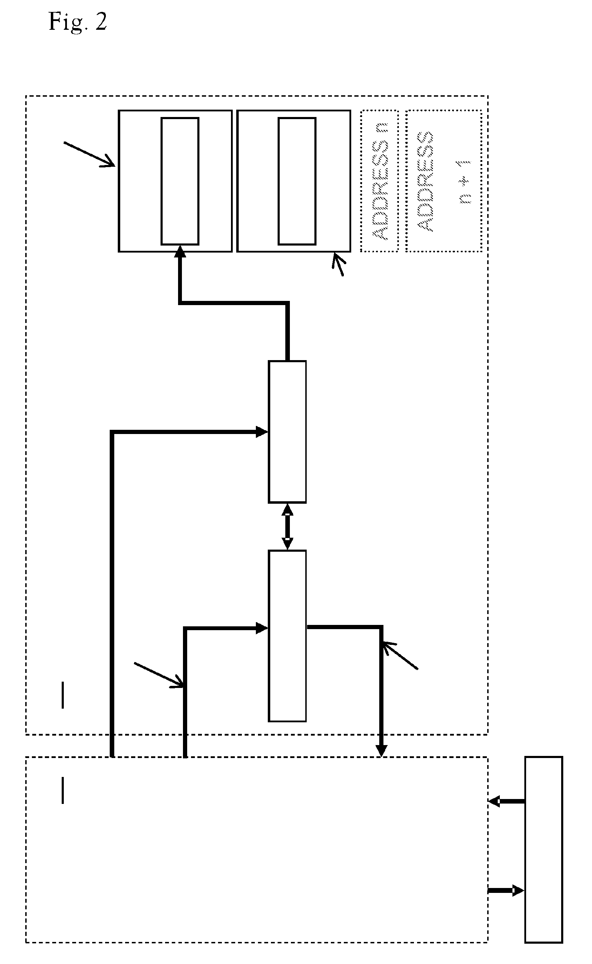

The first address location 40 stores a pre-encryption key 64 which comprises data that is specific to the secured resource to which the key 14 allows access. This transponder 28 is typically programmed with the pre-encryption key 64 in a secure location as will be described in further detail with reference to Figure 2.

The second address location 42 stores key status data 65. At any one time this address location has one of at least two possible data sets stored within it. One data set relates to the key 14 being activated and any other data set relates to the key being deactivated. The data set relating to the key being deactivated may be represented by an empty address location. In this case, if the memory is inadvertently blanked, then access to the secured resource will not be permitted.

When a challenge is issued by the ICM 26, the key modifier 62 collects the pre-encryption key 64 from the first address location 40 and the key status data 65 from the second address location 42. The challenge data typically comprises a data component and a command component. For example, if the challenge is a 48-bit number, this consists of a 40-bit data string and an 8-bit command component. The command component tells the key modifier 62 how to process the challenge data. The command component may tell the key modifier 62 to store the 40-bit data string in the memory 40. This command would be used during a "key teach" operation which will be further described with reference to Figure 2. However, during the vast majority of the operation cycles of the system, the command will be to encrypt the data using the encryption key 66. The encryption key 66 is then provided to the algorithm 38 to combine with the data part of the challenge to provide the response data 48.

The data part of the challenge and response data are not predetermined data sequences, but consist of randomly generated data. The ICM 26 is equipped with an algorithm that gives the same response data as would be expected from the transponder 28 if the status data 65 is consistent with the transponder 28 of the key 14 being enabled. The ICM 26 receives the response data 26 from the transponder 28 and, provided the data content is correct, access is enabled to the secured resource.

If the content of the second address location is inconsistent with the key 14 being enabled, there will either be no response data, or the response data will not match the data expected by the ICM 26. In either case, access to the secured resource is not enabled.

Figure 2 shows a "key teach" operation that is carried out before the vehicle owner acquires the security system. This operation programs the first address location 40 with the pre-encryption data 64 that is unique to the vehicle, or other secured resource to which the key 14 is designed to provide access. The data is programmed into the first address location 40 using a challenge consisting of a data component unique to the vehicle combined with a command component requiring that the data component be written to the first address location. It will be apparent to the skilled man that it is imperative that the "key teach" operation occurs in a secure environment to ensure that the unique data relating to the vehicle cannot be intercepted during the operation.

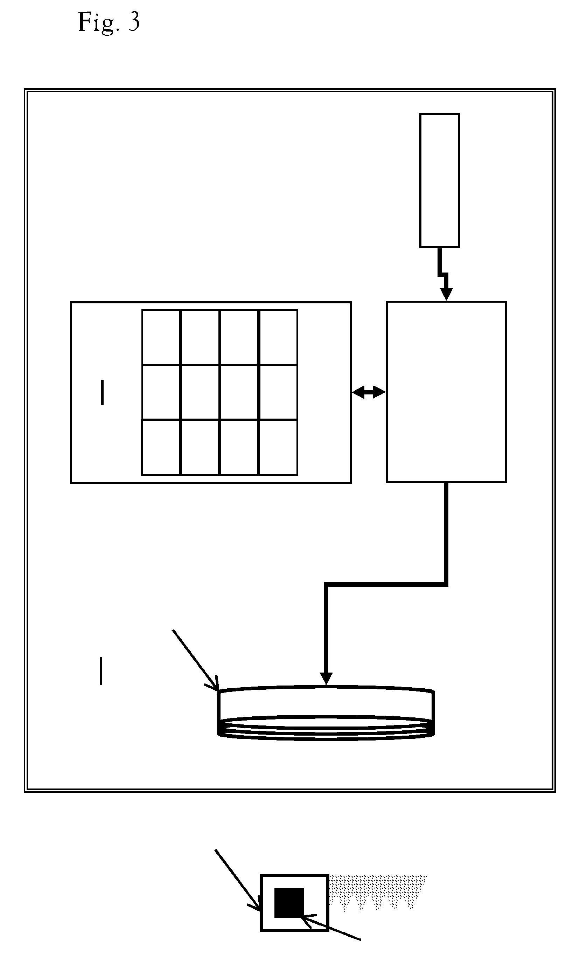

Figure 3 shows the key 14 being enabled or disabled by a security terminal 54. The manufacturer or supplying dealer programs the terminal 54 with a code unique to the vehicle, or other secured resource, to which the key 14 is designed to provide access. The unique code is referred to as a security code or security key 60.

Upon operation of the terminal 54, the security key 60 interacts with codes stored in the transponder 28 of the key 14 via an antenna 30. The antenna 30 operates under the control of electronics 56 activated within the security terminal 54. The user interface with the terminal is provided by a key pad 58 or other similar authorisation means. When the key 14 is brought into transmission range of the antenna 30 and the user inputs an authorisation code via the key pad 58, the electronics 56 transmits a signal via the antenna 30 that disables the transponder 28 of the key 14. The key 14 may then be left in the vicinity of the terminal 54 or may be taken away and left somewhere convenient or hidden. In that disabled state, the key 14 cannot be used to make an active bogus copy or to access or start the vehicle.

In order to enable the key 14 it is brought into transmission range of the antenna 30 (if not already in range) and the user inputs an authorisation code via the key pad 58. That code may be the same as that entered to disable the transponder 28 or may be different. If the same code is used, the state of the transponder 28 is toggled with each successive entry of the code. The electronics 56 then transmits a signal via the antenna 30 that enables the transponder 28 of the key 14. This can be done shortly before gaining access to the vehicle, to minimise the opportunity for unauthorised access to the enabled key.

The authorisation code typically comprises a multi-digit or alphanumeric sequence. However, other authorisation means such as a fingerprint scanner or other biometric sensor or mechanical keys are also contemplated within the broad concept of the invention.

Many variations are possible within the inventive concept. For example, it is possible for the security terminal to be portable or indeed to be associated with the vehicle, provided that the key is disabled when stored and not in use. A plurality of security terminals may be employed, one being in each location typically visited by the vehicle owner or driver.

Enabling or disabling the transponder 28 may be in response to further user command once the user has been identified, for example by a two-position rocker switch on the security terminal. The transponder 28 may thereby be enabled when the switch is in one position and be disabled when the switch is in the other position.

Vehicles and other secured resources are often used or accessed by persons other than the main user. It is often desirable that the access permitted to such third parties is limited, for example to particular periods of time. In some circumstances, therefore, it would be advantageous for the secured resource owner to specify the time period for which the physical key is enabled. For example, the physical key may be enabled for a limited number of hours during a working day or for a limited amount of time from enablement. The transponder, in cooperation with the security terminal, may comprise electronics that allow the time period to be configurable.

The invention may be used with any vehicle security system that uses electronic means to verify that a correct key is present, including vehicle security systems using fixed codes, rolling codes and encryption. The switching feature of the invention may also be applied to, but is not limited to, symmetric or asymmetric cryptographic security systems.

## Claims

1. A physical key (28) for controlling access to a secured resource using a response code, the physical key (28) comprising:
a memory (40, 42) configured to store key status data and pre-encryption data unique to the secured resource;
a code generator (62) configured to generate the response code by generating an encryption key from the key status data and the pre-encryption data and combining the encryption key with challenge data issued upon attempting to access the secured resource.

2. The key of Claim 1, wherein the memory comprises first and second address locations (40, 42) and the pre-encryption data is stored in one of said address locations (40), and the key status data is stored in another of said address locations (42).

3. The key of claim 1 or claim 2, wherein the code generator comprises a key modifier (62) and an algorithm (38).

4. A security system comprising a physical key (28), according to any preceding claim, and a terminal (54) for writing the key status data to the memory (40, 42) of the physical key (28)
wherein the terminal (54) is configured to provide at least key status code to the physical key (28) that will result in a response code that will permit access to the secured resource, when the challenge is issued, and
wherein the ability of the physical key (28) to access the secured resource can be successively and repeatedly enabled and disabled by the terminal.

5. The system of claim 4, wherein the terminal (54) is arranged to toggle the status of the physical key between enabled and disabled.

6. The system of claim 4 or claim 5, wherein the terminal (54) includes a system status indicator configured to confirm whether the physical key is enabled/disabled.

7. The system according to claim 6, wherein the status indicator confirms whether the terminal is capable of data communication with the physical key (28).

8. The system according to any one of claims 4 to 7, wherein in the disabled condition, the code generator is unable to generate the response code.

9. The system according to any one of claims 4 to 7, wherein in the disabled condition, the code generator generates a response code that does not enable access to the secured resource.
